# EUROPEAN PATENT SPECIFICATION

(11) **EP 2 555 469 B1**
(45) Date of publication and mention of the grant of the patent: **08.03.2017**
(21) Application number: 11858236.0
(22) Date of filing: 31.12.2011
(51) Int. Cl.: H04L 12/70

(54) **FAULT PROTECTION METHOD AND DEVICE**
STÖRUNGSSCHUTZVERFAHREN UND -VORRICHTUNG
PROCÉDÉ ET DISPOSITIF DE PROTECTION CONTRE LES DÉFAILLANCES

(30) Priority: 09.02.2011 CN 201110037730
(43) Date of publication of application: 06.02.2013
(73) Proprietor: Huawei Technologies Co., Ltd., Longgang District Shenzhen, Guangdong 518129 (CN)
(72) Inventor: SUN, Jun, Shenzhen Guangdong 518129 (CN); CAI, Junzhou, Shenzhen Guangdong 518129 (CN); ZHANG, Jianfang, Shenzhen Guangdong 518129 (CN)
(74) Representative: Pfenning, Meinig & Partner mbB
(86) International application number: PCT/CN2011/085158
(87) International publication number: WO 2012/106976

(56) References cited:
- EP-A2- 1 473 887
- CN-A- 1 694 418
- CN-A- 1 710 869
- CN-A- 1 859 157
- CN-A- 101 656 572
- CN-A- 102 143 065
- US-A1- 2003 084 367
- QIAN GONG, RONG XU, JINTONG LIN: "Performance Enhancements of the Metro Transport NetworkBased-on GMPLS Multi-Service Transmission Platform", SPIE, PO BOX 10 BELLINGHAM WA 98227-0010 USA, 28 February 2005 (2005-02-28), pages 650-658, XP040196035,
- MANNIE E ET AL: "Recovery (Protection and Restoration) Terminology for Generalized Multi-Protocol Label Switching (GMPLS); rfc4427.txt", 20060301, 1 March 2006 (2006-03-01), XP015054972, ISSN: 0000-0003
- THIAGARAJAN S ET AL: "Economical evolution to high availability networks", DESIGN OF RELIABLE COMMUNICATION NETWORKS, 2003. (DRCN 2003). PROCEEDI NGS. FOURTH INTERNATIONAL WORKSHOP ON OCT. 19-22, 2003, PISCATAWAY, NJ, USA,IEEE, 19 October 2003 (2003-10-19), pages 311-316, XP010688083, DOI: 10.1109/DRCN.2003.1275371 ISBN: 978-0-7803-8118-6
- CCAMP GMPLS P&R DESIGN TEAM J P LANG (EDITOR) Y REKHTER (EDITOR) D PAPADIMITRIOU (EDITOR): "RSVP-TE Extensions in support of End-to-End Generalized Multi-Protocol Label Switching (GMPLS)-based Recovery; draft-ietf-ccamp-gmpls-recovery-e2e-signal ing-03.txt", 20050401, vol. ccamp, no. 3, 1 April 2005 (2005-04-01), XP015038129, ISSN: 0000-0004

## Description

### FIELD OF THE INVENTION

The present invention relates to the field of communications technologies, and in particular, to a fault protection method and device.

### BACKGROUND OF THE INVENTION

To transfer a customer service, an optical network may establish a connection which satisfies a need of the customer service for bandwidth and is used for transferring the customer service. A granularity of the connection bandwidth of the optical network is coarse, and reliability of the connection needs to be ensured inside the network.

The reliability is ensured by various protection and recovery technologies, such as 1 + 1 protection provided for the optical network connection. The 1 + 1 protection provides two connections for each customer service signal, where one is referred to as a working connection, and the other is referred to as a protection connection. A customer service signal is transmitted to the two connections, and at a remote end, one of the two connections is selected, according to signal quality of the two connections, to receive the customer service. In this way, when one connection is faulty, the service signal may be received from the other connection, so as to ensure that the service is not affected.

It may be seen here that the 1 + 1 protection can provide a quick switching within 50 ms, but occupies double resources. However, some service signals (such as an Ethernet service) do not have such a strict requirement for delay. Therefore, in order to save bandwidth resources of the optical network, a rerouting technology of a control plane may be used to recover the optical network connection. The control plane is a control component running in the optical network, for which the optical network provides a control channel, and in which a GMPLS (Generalized Multi-Protocol Label Switching, generalized multi-protocol label switching) protocol family runs. The GMPLS protocol family includes a routing protocol and a signaling protocol. The routing protocol is responsible for collection of network topology information (including node and link information), and is used for calculating a path where a connection pass. The signaling protocol is responsible for establishment of an optical network connection according to the calculated path.

In a case of using the control plane, a rerouting function may be provided for the connection, that is, when the working connection for transferring the customer service is faulty, the control plane uses a pre-configured recovery path or recalculates a path, and establishes a new connection to recover the connection for transferring the customer service. In this way, there is no need to provide two connections for the customer service all the time, and only another available connection needs to be provided when the connection is faulty, therefore, a bandwidth utilization rate is high. However, because the recovery technology of the control plane is used, fault recovery time is long.

A connection established by adopting the GMPLS control plane technology is referred to as an LSP (Label Switch Path, label switch path), LSP establishment is triggered by a source node, and a rerouting process is also triggered by the source node.

The control plane further provides a shared Mesh recovery technology. The shared Mesh recovery is based on rerouting, and only when the working connection is faulty, a standby connection is established to transfer the customer service. The difference between it and the rerouting is that, the standby connection (namely, the recovery path) is preset in advance and the resources are reserved, except that a group of services are designated to share part of or all the standby connection, other services cannot occupy the standby connection, and as long as working paths of two shared Mesh recovery services are separated, their recovery paths may share the resources.

The 1 + 1 protection is combined with the control plane recovery technology (including the shared Mesh recovery), so that the working and protection paths of the 1 + 1 protection service have the rerouting function, then may provide multi-time fiber breaking protection on a premise that the bandwidth resources are sufficient. This type of services based on the GMPLS control plane has permanent 1 + 1 and 1 + 1 + rerouting.

In an implementation process of the present invention, the inventor finds that, the existing permanent 1 + 1 service has at least the following disadvantages.

### 1) When the resources are insufficient, two-time ensured protection cannot be provided.

That is, after any one of an active path and a standby path is faulty, the rerouting is performed, and when the resources are sufficient, the rerouting can be successful and a 1 + 1 protection relationship is formed again. However, when the resources are insufficient, the rerouting cannot be successful, and the 1 + 1 protection cannot be provided again, that is, only one-time ensured protection can only be provided.

### 2) Too many bandwidth resources are occupied.

Once an available idle resource is found, the permanent 1 + 1 service occupies double bandwidth resources all the time, and other services may be interrupted because a resource cannot be obtained.

"Performance Enhancements of the Metro Transport Network Based-on GMPLS Multi-Service Transmission Platform" (QIAN GONG, RONG XU, JINTONG LIN, 28 February 2005) disclosed that the performance improvement of the carrier metro network utilizing intelligent optical switch. This network offers end-to-end point-and click provisioning, less time-delay, fast protection and restoration, fast service provide, traffic engineer, SLA and new service etc.

"Recovery (Protection and Restoration) Terminology for Generalized Multi-Protocol Label Switching (GMPLS)" (RFC4427, 01 March 2006) defines a common terminology for Generalized Multi-Protocol Label Switching (GMPLS)-based recovery mechanisms (i.e., protection and restoration). The terminology is independent of the underlying transport technologies covered by GMPLS.

"Economical evolution to high availability networks" (THIAGARAJAN S ET AL, 19 October 2003) disclosed shared mesh path restoration schemes to optimize the spare capacity bandwidth for mesh and hybrid ring-mesh network scenarios. When a limited amount of spare capacity in a shared mesh configuration is deployed in conjunction with existing ring architectures, high availability services can be provided with complete dual-failure restorability.

"RSVP-TE Extensions in support of End-to-End Generalized Multi-Protocol Label Switching (GMPLS)-based Revovery" (J P LANG, Y REKHTER, D PAPADIMITRIOU, 01 April 2005) disclosed protocol specific procedures and extensions for GMPLS RSVP-TE signaling to support end-to-end LSP recovery that is protection and restoration.

CN1710869A (GUANGDONG PROV. TELECOMM. CO., 21 December 2005) disclosed that a method for realizing enhanced dynamic 1+1 protection for connection using ASON control plane. When working path is faulty, service is switched to protection path and protection path for current working path is setup. When protection path is faulty, service is still transported on current working path and protection path is rebuilt. When working path and protection path are faulty, working path and protection path are rebuild by ASON control plane.

CN1694418A (FENGHUO COMMUNICATION SCI. & TECHNOLOGY, 09 November 2005) disclosed a service/circuit protection and recovery method. The service/circuit is first automatically protected by the multiplex section protection method. When the multiplex section protection is unusable, the mesh recovery is started at once.

### SUMMARY OF THE INVENTION

Embodiments of the present invention provide a fault protection method and device, which provide two-time ensured fault protection for a service.

The embodiments of the present invention are implemented through the following technical solutions.

An embodiment of the present invention provides a fault protection method, including:
creating a working path and a protection path for a service to form 1 + 1 protection, and creating, for the service, a shared Mesh recovery path separate from both the working path and the protection path;
if the working path or the protection path is faulty, activating the shared Mesh recovery path, and carrying two ASSOCIATION objects in an activation message, wherein a type of one ASSOCIATION object is a recovery type, and a corresponding association identifier is an identifier of a path forming the 1 + 1 protection with the faulty path, and a type of the other ASSOCIATION object is an ensured recovery type, and a corresponding association identifier is an identifier of a faulty path; and removing, by a destination node that receives the activation message, the 1 + 1 protection formed by the working path and the protection path according to the activation message, and establishing the 1 + 1 protection formed by the protection path which is not faulty and the activated shared Mesh recovery path, or formed by the working path which is not faulty and the activated shared Mesh recovery path; and
if the shared Mesh recovery path is faulty, the working path and the protection path continue maintaining the 1 + 1 protection.

An embodiment of the present invention provides a fault protection device, including:
a path creating unit (40), configured to create a working path and a protection path for a service to form 1 + 1 protection, and create, for the service, a shared Mesh recovery path separate from both the working path and the protection path; and
a fault protecting unit (41) comprises:
   a fault identifying subunit, configured to determine which path the faulty path is: the working path, the protection path, or the shared Mesh recovery path; and
   an activating subunit, configured to, when the working path or the protection path is faulty, activate the shared Mesh recovery path, and carry two ASSOCIATION objects in an activation message, wherein a type of one ASSOCIATION object is a recovery type, and a corresponding association identifier is an identifier of a path forming the 1 + 1 protection with the faulty path, and a type of the other ASSOCIATION object is an ensured recovery type, and a corresponding association identifier is an identifier of a faulty path; a destination node receiving the activation message removes the 1 + 1 protection formed by the working path and the protection path according to the activation message, and establishes the 1 + 1 protection formed by the protection path which is not faulty and the activated shared Mesh recovery path or formed by the working path which is not faulty and the activated shared Mesh recovery path; and
   the fault protecting unit (41) continues maintaining the 1 + 1 protection formed by the working path and the protection path when the shared Mesh recovery path is faulty.

It may be seen from the foregoing technical solutions provided in the embodiments of the present invention that, according to the embodiments of the present invention, the two-time ensured fault protection is implemented, which may achieve an objective of quick service protection against multiple faults, meanwhile, constrain consumption of the bandwidth resources to some extent, and obtain a balance between a protection capability and bandwidth consumption.

### BRIEF DESCRIPTION OF THE DRAWINGS

FIG. 1 is a flow chart of a fault protection method according to an embodiment of the present invention;
FIG. 2 is a schematic diagram of multiple services sharing part of a shared Mesh recovery path according to an embodiment of the present invention;
FIG. 3 is a schematic diagram of fault protection according to a specific example of the present invention; and
FIG. 4 is a schematic structural diagram of a fault protection device according to an embodiment of the present invention.

### DETAILED DESCRIPTION OF THE EMBODIMENTS

The technical solutions of the present invention are clearly and completely described in the following with reference to accompanying drawings. It may be understood that the embodiments described are only part of rather than all of the embodiments of the present invention. Based on the embodiments of the present invention, all other embodiments obtained by persons of ordinary skill in the art without making creative efforts shall fall within the protection scope of the present invention.

For most operators, two-time failure protection is a common requirement, while three-time failure protection, whose network construction cost is too high and whose cost-performance ratio is low, is scarcely required. For the two-time failure protection, an operator generally further requires that service performance within 50 ms is provided, which requires that the two-time failure protection should be ensured. Neither existing permanent 1 + 1 nor 1 + 1 + rerouting protection type can fully achieve the foregoing objective. Based on this, an embodiment of the present invention provides an ensured protection type against two failures. The two-time ensured fault protection in the embodiment of the present invention is for two faults in a whole network.

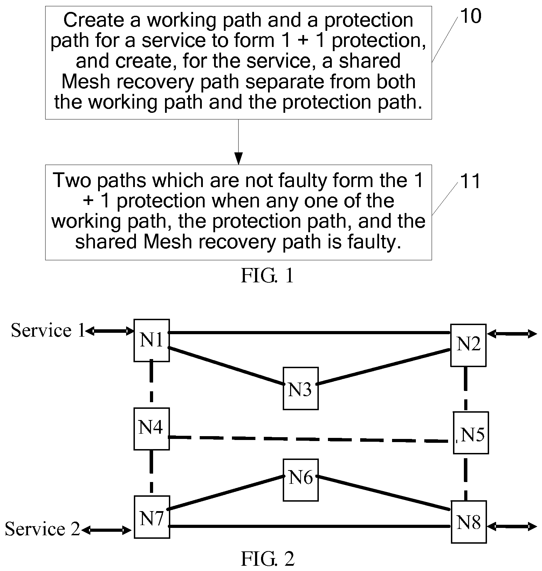

An embodiment of the present invention provides a fault protection method, and referring to FIG. 1, the method includes the following steps.

Step 10: Create a working path and a protection path for a service to form 1 + 1 protection, and create, for the service, a shared Mesh recovery path separate from both the working path and the protection path.

For the shared Mesh recovery path, only resources are reserved, but no connection is established; and the "separate" means that except for a source node and a destination node, the shared Mesh recovery path has no common node with the working path and the protection path.

The embodiment of the present invention further includes: setting a protection type of the service to an ensured two-time fault protection type, for example, in the following setting manners.
1) Newly add a flag bit, which is combined with an existing flag bit, to indicate that the protection type of the service is the ensured two-time fault protection type; for example, add a flag bit G in a Protection object of RSVP-TE, where a format is as follows. 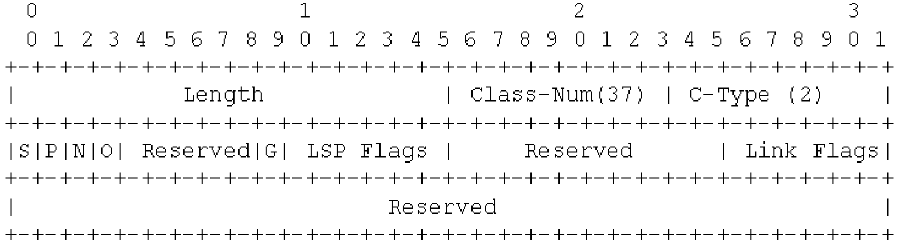
   The bit G occupies 1 bit, and may be used in combination with an LSP Flags field. When the field is set to 1, a value of the LSP Flags field can only be set to 0X08 or 0X10. If the value of the LSP Flags is 0X08, it indicates two-time ensured 1 + 1 unidirectional protection, and if the value is 0X10, it indicates two-time ensured 1 + 1 bi-directional protection. When the field is set to 0, it does not constrain the LSP Flags field, and a meaning of the LSP Flags field is interpreted according to an existing standard.
   Or
2) Use a combination of different values of existing flag bits to indicate that the protection type of the service is the ensured two-time fault protection type. For example, combinations of 0x02 and 0x08 or 0x10 in a Protection object of RSVP-TE, 001010 (0X0A) and 010010 (0X12), to indicate a service with two-time ensured protection, that is, 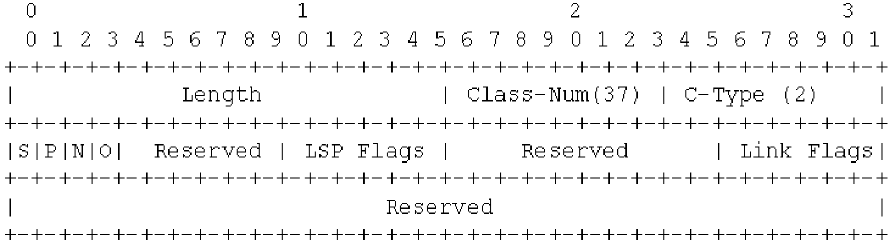
   LSP Flags: 6 bits. A recovery type of an LSP, where
   0X00: no protection
   0X01: rerouting
   0X02: rerouting without an extra service
   0X04: 1: N protection (an extra service may be transferred)
   0X08: 1 + 1 unidirectional protection
   0X10: 1 + 1 bi-directional protection
   0X0A: two-time ensured 1 + 1 unidirectional protection
   0X12: two-time ensured 1 + 1 bi-directional protection

Step 11: Two paths which are not faulty forms the 1 + 1 protection when any one of the working path, the protection path, and the shared Mesh recovery path is faulty.

If the working path or the protection path is faulty, the shared Mesh recovery path is activated, and two association ASSOCIATION objects are carried in an activation message, where a type of one ASSOCIATION object is a recovery type, and a corresponding association identifier is an identifier of a path forming the 1 + 1 protection with the faulty path, and a type of the other ASSOCIATION object is an ensured recovery type, and a corresponding association identifier is an identifier of a faulty path; and the destination node receiving the activation message removes the 1 + 1 protection formed by the working path and the protection path according to the activation message, and establishes the 1 + 1 protection formed by the protection path which is not faulty and the activated shared Mesh recovery path, or formed by the working path which is not faulty and the activated shared Mesh recovery path. In this case, the rerouting is not performed, and the 1 + 1 protection still exists for the service, and if a fault occurs again, normal transmission of the service can still be ensured.

That is, in the embodiment of the present invention, the path identifier of the faulty path is carried by extending the ASSOCIATION object. For example, in ASSOCIATION objects of IPv4 and IPv6, a new ASSOCIATION Type type is added to carry an LSP identifier of a faulty LSP to indicate that the LSP is faulty, so as to correctly establish an association relationship. Formats of the ASSOCIATION objects of IPv4 and IPv6 are as follows.

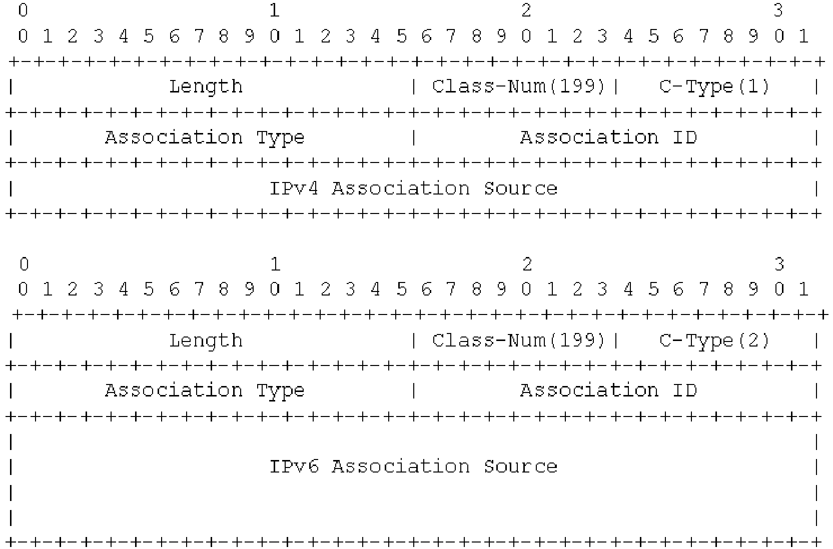

Association Type 16bit, indicates an association type, a value 0 indicates reservation; a value 1 indicates that the type is recovery; a value 2 indicates that the type is resource sharing; and a value 3 indicates ensured recovery (the type is a newly extended type).

Association ID: 16 bits, indicates an association ID. When the value of the Association Type is 3, the Association ID field carries the LSP identifier of the faulty LSP. When the value of the Association Type is not 3, an LSP identifier of an association LSP is carried, namely, an identifier of an LSP forming the 1 + 1 protection with the faulty path is carried.

If the shared Mesh recovery path is faulty, the working path and the protection path continuously maintains the 1 + 1 protection, and rerouting does not need to be performed, and if a fault occurs again, the normal transmission of the service can still be ensured.

In the embodiment of the present invention, after the service has no 1 + 1 protection, if the working path is faulty, rerouting is performed in the faulty path to recover the service.

It may be understood that, recovery paths of multiple services with separate working paths and protection paths may be designated to the same shared Mesh recovery path, which may be full path sharing, that is, configured shared Mesh recovery paths completely overlaps from the source node of the service to the destination node; and may also be partial path sharing. As shown in FIG. 2, working paths and protection paths of a service 1 and a service 2 are totally separate. A shared Mesh recovery path of the service 1 may be designated as N1-N4-N5-N2, and a shared Mesh recovery path of the service 2 may be designated as N7-N4-N5-N8. In this way, an N4-N5 section is a shared recovery resource, namely, the partial path sharing.

For further understanding of the present invention, a specific example is taken below to further describe the foregoing method.

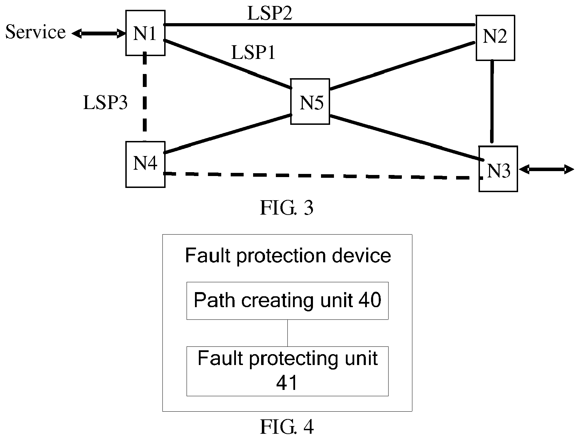

Referring to FIG. 3, a working path LSP1 (N1-N5-N3) and a protection path LSP2 (N1-N2-N3) are created, a bit G in a PROTECTION object of the working path and the protection path is set to 1, a protection type is set to 0X08 or 0X10 (1 + 1 unidirectional two-time ensured protection or 1 + 1 bi-directional two-time ensured protection), and at the same time, a shared Mesh recovery path LSP3 (N1-N4-N3) separate from both the working path LSP1 and the protection path LSP2 is created, and for the LSP3, only resources are reserved, but no connection is established.

In a case of a first fault, if the working path LSP1 is faulty, a service is first switched over to the protection path LSP2, and then the shared Mesh recovery path LSP3 is activated, so that the LSP2 and LSP3 form 1 + 1 protection again, and after the switching, the LSP2 is the working path, and the LSP3 is the protection path. When the LSP3 is activated, a Path message carries two ASSOCIATION objects, and for convenience of description in the embodiment of the present invention, one is referred to as Aobj1, and the other is referred to as Aobj2. A value of an Association Type in Aobj1 is set to 1, and a value of an Association ID is set to an LSP ID of the association LSP2; a value of an Association Type in Aobj2 is set to 3, and a value of an Association ID is set to an LSP ID of the faulty LSP1, so as to inform a destination node that the LSP1 is faulty, and it is needed to remove an association relationship between the LSP1 and the LSP2 so as to establish a new association relationship between the normal LSP2 and the shared Mesh recovery path LSP3.

After the destination node receives the Path message for activating the shared Mesh recovery path, the association relationship between the working path LSP1 and the protection path LSP2 is removed, and the association relationship between the LSP2 and the shared Mesh recovery path LSP3 is established. After the LSP3 is successfully activated, information of the Association ID field in the ASSOCIATION object in the LSP2 is renewed to an LSP identifier of the LSP3.

In the case of the first fault, if the protection path LSP2 is faulty, the switching of the service is not performed, and the shared Mesh recovery path LSP3 is activated, so that the LSP1 and the LSP3 form the 1 + 1 protection again and the LSP3 becomes the protection path. When the LSP3 is activated, a Path message carries two ASSOCIATION objects, and for convenience of description, one is referred to as Aobj1, and the other is referred to as Aobj2. A value of an Association Type in Aobj1 is set to 1, and a value of an Association ID is set to the LSP ID of the LSP1; and a value of an Association Type in Aobj2 is set to 3, and a value of an Association ID is set to the LSP ID of the faulty LSP2. After the destination node receives the Path message for activating the shared Mesh recovery path, the association relationship between the working path LSP1 and the protection path LSP2 is removed, and an association relationship between the LSP1 and the shared Mesh recovery path LSP3 is established. After the LSP3 is successfully activated, information of the Association identifier field in the ASSOCATION object of the LSP1 is renewed to the LSP identifier of the LSP3.

In the case of the first fault, if the shared Mesh recovery path is faulty, the service is not affected, the working path and the protection path are normal and can provide the 1 + 1 protection for the service, so the 1 + 1 protection formed by the working path and the protection path is continuously maintained.

It should be noted that, in the case of the first fault, no matter the faulty path is the working path, the protection path, or the shared Mesh recovery path, rerouting is not performed.

In a case of a second fault, if the working path is faulty, the service is switched over to the protection path, and rerouting is not performed; and if the protection path is faulty, the service is not affected, and rerouting is not performed in the protection path.

In a case of a third fault, the service already has no 1 + 1 protection, rerouting may be performed to recover the service.

According to the embodiment of the present invention, the two-time ensured fault protection is implemented, which may achieve an objective of quick service protection against multiple faults, meanwhile, constrain consumption of bandwidth resources to some extent, and obtain a balance between a protection capability and bandwidth consumption.

Another embodiment of the present invention provides a fault protection device, and referring to FIG. 4, the fault protection device includes:
a path creating unit 40, configured to create a working path and a protection path for a service to form 1 + 1 protection, and create, for the service, a shared Mesh recovery path separate from both the working path and the protection path, where for the shared Mesh recovery path, only resources are reserved, but no connection is established; and
a fault protecting unit 41, configured to establish the 1 + 1 protection formed by two paths which are not faculty when any one of the working path, the protection path, and the shared Mesh recovery path is faulty.

The fault protecting unit 41 may further include:
a fault identifying subunit 410 (not shown in the figure), configured to determine which path the faulty path is: the working path, the protection path, or the shared Mesh recovery path; and
an activating subunit 411 (not shown in the figure), configured to, when the working path or the protection path is faulty, activate the shared Mesh recovery path, and carry two association ASSOCIATION objects in an activation message, where a type of one ASSOCIATION object is a recovery type, and a corresponding association identifier is an identifier of a path forming the 1 + 1 protection with the faulty path, and a type of the other ASSOCIATION object is an ensured recovery type, and a corresponding association identifier is an identifier of a faulty path; a destination node receiving the activation message removes the 1 + 1 protection formed by the working path and the protection path according to the activation message, and establishes the 1 + 1 protection formed by the protection path which is not faulty and the activated shared Mesh recovery path, or formed by the working path which is not faulty and the activated shared Mesh recovery path.

The fault protecting unit 41 continues maintaining the 1 + 1 protection formed by the working path and the protection path when the shared Mesh recovery path is faulty.

The fault protection device may further include:
a setting unit 42 (not shown in the figure), configured to set a protection type of the service to an ensured two-time fault protection type, and reference may be made to the description in step 10 of the foregoing embodiment for a specific setting method, which is not repeatedly described here; and/or
a rerouting unit 43 (not shown in the figure), configured to perform rerouting to recover the service after the service has no 1 + 1 protection and the working path is faulty.

According to the embodiment of the present invention, two-time ensured fault protection is implemented, which may achieve an objective of quick service protection against multiple faults, meanwhile, constrain consumption of bandwidth resources to some extent, and obtain a balance between a protection capability and bandwidth consumption.

To sum up, according to the embodiments of the present invention, the two-time ensured fault protection is implemented, which may achieve the objective of quick service protection against multiple faults, meanwhile, constrain the consumption of the bandwidth resources to some extent, and obtain the balance between the protection capability and the bandwidth consumption.

Person of ordinary skill in the art may understand that all or part of the steps of the method in the embodiments of the present invention may be implemented by a program instructing relevant hardware. The program may be stored in a computer readable storage medium, such as a read-only memory (referred to as ROM) or a random access memory (referred to as RAM), a magnetic disk, a compact disk, and so on.

The foregoing descriptions are merely exemplary implementation manners of the present invention, but the protection scope of the present invention is not limited here. Any variation or replacement that may be easily thought of by persons skilled in the art without departing from the technical scope disclosed in the present invention shall fall within the protection scope of the present invention. Therefore, the protection scope of the present invention shall be subject to the protection scope of the claims.

## Claims

1. A fault protection method, comprising:
creating a working path and a protection path for a service to form 1 + 1 protection, and creating, for the service, a shared Mesh recovery path separate from both the working path and the protection path;
if the working path or the protection path is faulty, activating the shared Mesh recovery path, and carrying two ASSOCIATION objects in an activation message, wherein a type of one ASSOCIATION object is a recovery type, and a corresponding association identifier is an identifier of a path forming the 1 + 1 protection with the faulty path, and a type of the other ASSOCIATION object is an ensured recovery type, and a corresponding association identifier is an identifier of a faulty path; and removing, by a destination node that receives the activation message, the 1 + 1 protection formed by the working path and the protection path according to the activation message, and establishing the 1 + 1 protection formed by the protection path which is not faulty and the activated shared Mesh recovery path, or formed by the working path which is not faulty and the activated shared Mesh recovery path; and
if the shared Mesh recovery path is faulty, the working path and the protection path continue maintaining the 1 + 1 protection.

2. The method according to claim 1, wherein for the shared Mesh recovery path, only resources are reserved, but no connection is established.

3. The method according to claim 1, further comprising:
setting a protection type of the service to an ensured two- time fault protection type.

4. The method according to claim 3, wherein the setting the protection type of the service to the ensured two-time fault protection type comprises:
newly adding a flag bit, which is combined with an existing flag bit, to indicate that the protection type of the service is the ensured two-time fault protection type; or
using a combination of different values of existing flag bits to indicate that the protection type of the service is the ensured two-time fault protection type.

5. The method according to claim 1, further comprising:
after the service has no 1 + 1 protection, if the working path is faulty, performing, by the faulty path, rerouting to recover the service.

6. A fault protection device, comprising:
a path creating unit (40), configured to create a working path and a protection path for a service to form 1 + 1 protection, and create, for the service, a shared Mesh recovery path separate from both the working path and the protection path; and
a fault protecting unit (41) comprises:
a fault identifying subunit, configured to determine which path the faulty path is: the working path, the protection path, or the shared Mesh recovery path; and
an activating subunit, configured to, when the working path or the protection path is faulty, activate the shared Mesh recovery path, and carry two ASSOCIATION objects in an activation message, wherein a type of one ASSOCIATION object is a recovery type, and a corresponding association identifier is an identifier of a path forming the 1 + 1 protection with the faulty path, and a type of the other ASSOCIATION object is an ensured recovery type, and a corresponding association identifier is an identifier of a faulty path; a destination node receiving the activation message removes the 1 + 1 protection formed by the working path and the protection path according to the activation message, and establishes the 1 + 1 protection formed by the protection path which is not faulty and the activated shared Mesh recovery path or formed by the working path which is not faulty and the activated shared Mesh recovery path; and
the fault protecting unit (41) continues maintaining the 1 + 1 protection formed by the working path and the protection path when the shared Mesh recovery path is faulty.

7. The device according to claim 6, further comprising:
a setting unit, configured to set a protection type of the service to an ensured two-time fault protection type.

8. The device according to claim 6 or 7, further comprising:
a rerouting unit, configured to perform rerouting to recover the service after the service has no 1 + 1 protection and the working path is faulty.

## Patentansprüche

1. Störungsschutzverfahren, umfassend:
Erstellen eines Arbeitswegs und eines Schutzwegs für einen Dienst, um einen 1+1-Schutz zu bilden, und Erstellen, für den Dienst, eines gemeinsamen Maschen-Wiederherstellungswegs separat vom Arbeitsweg und Schutzweg;
falls der Arbeitsweg oder der Schutzweg gestört ist, Aktivieren des gemeinsamen Maschen-Wiederherstellungswegs und Führen von zwei ZUORDNUNGS-Objekten in einer Aktivierungsnachricht, wobei ein Typ eines ZUORDNUNGS-Objekts ein Wiederherstellungstyp ist und ein entsprechender Zuordnungsidentifikator ein Identifikator eines Wegs ist, der den 1+1-Schutz mit dem gestörten Weg bildet, und ein Typ des anderen ZUORDNUNGS-Objekts ein gesicherter Wiederherstellungstyp ist, und ein entsprechender Zuordnungsidentifikator ein Identifikator eines gestörten Wegs ist; und Entfernen, durch einen Zielknoten, der die Aktivierungsnachricht empfängt, des durch den Arbeitsweg und den Schutzweg gebildeten 1+1-Schutzes gemäß der Aktivierungsnachricht, und Einrichten des 1+1-Schutzes, der durch den Schutzweg, der nicht gestört ist, und den aktivierten gemeinsamen Maschen-Wiederherstellungsweg gebildet wird, oder der durch den Arbeitsweg, der nicht gestört ist, und den aktivierten gemeinsamen Maschen-Wiederherstellungsweg gebildet wird; und
falls der gemeinsame Maschen-Wiederherstellungsweg gestört ist, erhalten der Arbeitsweg und der Schutzweg den 1+1-Schutz weiter aufrecht.

2. Verfahren gemäß Anspruch 1, wobei für den gemeinsamen Maschen-Wiederherstellungsweg nur Ressourcen reserviert werden, aber keine Verbindung hergestellt wird.

3. Verfahren gemäß Anspruch 1, ferner umfassend:
Einstellen eines Schutztyps des Dienstes auf einen gesicherten Zweifach-Störungsschutztyp.

4. Verfahren gemäß Anspruch 3, wobei das Einstellen des Schutztyps des Dienstes auf den gesicherten Zweifach-Störungsschutztyp umfasst:
neues Hinzufügen eines Zustandsbits, welches mit einem bestehenden Zustandsbit kombiniert wird, um anzuzeigen, dass der Schutztyp des Dienstes der gesicherte Zweifach-Störungsschutztyp ist; oder
Verwenden einer Kombination von unterschiedlichen Werten von bestehenden Zustandsbits, um anzuzeigen, dass der Schutztyp des Dienstes der gesicherte Zweifach-Störungsschutztyp ist.

5. Verfahren gemäß Anspruch 1, ferner umfassend:
nachdem der Dienst keinen 1+1-Schutz hat, falls der Arbeitsweg gestört ist, Ausführen, durch den gestörten Weg, eines Umleitens, um den Dienst wiederherzustellen.

6. Störungsschutzvorrichtung, umfassend:
eine Wegerstellungseinheit (40), die dafür ausgelegt ist, einen Arbeitsweg und einen Schutzweg für einen Dienst zu erstellen, um einen 1+1-Schutz zu bilden, und für den Dienst einen gemeinsamen Maschen-Wiederherstellungsweg separat vom Arbeitsweg und Schutzweg zu erstellen; und
eine Störungsschutzeinheit (41), umfassend:
eine Störungserkennungs-Untereinheit, die dafür ausgelegt ist zu bestimmen, welcher Weg der gestörte Weg ist: der Arbeitsweg, der Schutzweg oder der gemeinsame Maschen-Wiederherstellungsweg; und
eine Aktivierungs-Untereinheit, die dafür ausgelegt ist, wenn der Arbeitsweg oder der Schutzweg gestört ist, den gemeinsamen Maschen-Wiederherstellungsweg zu aktivieren und zwei ZUORDNUNGS-Objekte in einer Aktivierungsnachricht zu führen, wobei ein Typ eines ZUORDNUNGS-Objekts ein Wiederherstellungstyp ist und ein entsprechender Zuordnungsidentifikator ein Identifikator eines Wegs ist, der den 1+1-Schutz mit dem gestörten Weg bildet, und ein Typ des anderen ZUORDNUNGS-Objekts ein gesicherter Wiederherstellungstyp ist und ein entsprechender Zuordnungsidentifikator ein Identifikator eines gestörten Wegs ist; ein Zielknoten, der die Aktivierungsnachricht empfängt, entfernt den durch den Arbeitsweg und den Schutzweg gebildeten 1+1-Schutz gemäß der Aktivierungsnachricht und richtet den 1+1-Schutz ein, der durch den Schutzweg, der nicht gestört ist, und den aktivierten gemeinsamen Maschen-Wiederherstellungsweg gebildet wird, oder der durch den Arbeitsweg, der nicht gestört ist, und den aktivierten gemeinsamen Maschen-Wiederherstellungsweg gebildet wird; und
die Störungsschutzeinheit (41) erhält den 1+1-Schutz weiter aufrecht, der durch den Arbeitsweg und den Schutzweg gebildet wird, wenn der gemeinsame Maschen-Wiederherstellungsweg gestört ist.

7. Vorrichtung gemäß Anspruch 6, ferner umfassend:
eine Einstelleinheit, die dafür ausgelegt ist, einen Schutztyp des Dienstes auf einen gesicherten Zweifach-Störungsschutztyp einzustellen.

8. Vorrichtung gemäß Anspruch 6 oder 7, ferner umfassend:
eine Umleitungseinheit, die dafür ausgelegt ist, ein Umleiten auszuführen, um den Dienst wiederherzustellen, nachdem der Dienst keinen 1+1-Schutz hat und der Arbeitsweg gestört ist.

## Revendications

1. Procédé de protection contre les défaillances comprenant les étapes suivantes :
créer un chemin opérationnel et un chemin de protection pour un service pour former une protection 1 + 1, et créer, pour le service, un chemin de récupération maillé partagé séparé à la fois du chemin opérationnel et du chemin de protection ;
si le chemin opérationnel ou le chemin de protection est défaillant, activer le chemin de récupération maillé partagé et acheminer deux objets ASSOCIATION dans un message d'activation, où un type d'un objet ASSOCIATION est un type de récupération, et un identifiant d'association correspondant est un identifiant d'un chemin formant la protection 1 + 1 avec le chemin défaillant, et un type de l'autre objet ASSOCIATION est un type de récupération garantie, et un identifiant d'association correspondant est un identifiant d'un chemin défaillant ; et supprimer, par un noeud de destination qui reçoit le message d'activation, la protection 1 + 1 formée par le chemin opérationnel et le chemin de protection conformément au message d'activation, et établir la protection 1 + 1 formée par le chemin de protection qui n'est pas défaillant et le chemin de récupération maillé partagé activé, ou formé par le chemin opérationnel qui n'est pas défaillant et le chemin de récupération maillé partagé activé ; et
si le chemin de récupération maillé partagé est défaillant, le chemin opérationnel et le chemin de protection continuent à maintenir la protection 1 + 1.

2. Procédé selon la revendication 1, dans lequel, pour le chemin de récupération maillé partagé, seules des ressources sont réservées, mais aucune connexion n'est établie.

3. Procédé selon la revendication 1, comprenant en outre l'étape suivante :
définir un type de protection du service à un type de protection contre les défaillances en deux temps garantie.

4. Procédé selon la revendication 3, dans lequel définir le type de protection du service au type de protection contre les défaillances en deux temps garantie comprend les étapes suivantes :
ajouter un nouveau bit indicateur, qui est combiné avec un bit indicateur existant, pour indiquer que le type de protection du service est le type de protection contre les défaillances en deux temps garantie ; ou
utiliser une combinaison de différentes valeurs de bits indicateurs existants pour indiquer que le type de protection du service est le type de protection contre les défaillances en deux temps garantie.

5. Procédé selon la revendication 1, comprenant en outre l'étape suivante :
après que le service n'a plus de protection 1 + 1, si le chemin opérationnel s'avère défaillant, exécuter, par le chemin défaillant, un réacheminement pour récupérer le service.

6. Dispositif de protection contre les défaillances comprenant :
une unité de création de chemin (40), configurée pour créer un chemin opérationnel et un chemin de protection pour un service pour former une protection 1 + 1, et créer, pour le service, un chemin de récupération maillé partagé séparé à la fois du chemin opérationnel et du chemin de protection ; et
une unité de protection contre les défaillances (41), comprenant :
une sous-unité d'identification de défaillance, configurée pour déterminer quel chemin est le chemin défaillant : le chemin opérationnel, le chemin de protection ou le chemin de récupération maillé partagé ; et
une sous-unité d'activation, configurée pour, lorsque le chemin opérationnel ou le chemin de protection est défaillant, activer le chemin de récupération maillé partagé et acheminer deux objets ASSOCIATION dans un message d'activation, où un type d'un objet ASSOCIATION est un type de récupération, et un identifiant d'association correspondant est un identifiant d'un chemin formant la protection 1 + 1 avec le chemin défaillant, et un type de l'autre objet ASSOCIATION est un type de récupération garantie, et un identifiant d'association correspondant est un identifiant d'un chemin défaillant ; un noeud de destination recevant le message d'activation supprime la protection 1 + 1 formée par le chemin opérationnel et le chemin de protection conformément au message d'activation, et établit la protection 1 + 1 formée par le chemin de protection qui n'est pas défaillant et le chemin de récupération maillé partagé activé ou formé par le chemin opérationnel qui n'est pas défaillant et le chemin de récupération maillé partagé activé ; et
l'unité de protection contre les défaillances (41) continue de maintenir la protection 1 + 1 formée par le chemin opérationnel et le chemin de protection lorsque le chemin de récupération maillé partagé est défaillant.

7. Dispositif selon la revendication 6, comprenant en outre :
une unité de définition, configurée pour définir un type de protection du service à un type de protection contre les défaillances en deux temps garantie.

8. Dispositif selon la revendication 6 ou la revendication 7, comprenant en outre :
une unité de réacheminement, configurée pour exécuter un réacheminement pour récupérer le service après que le service n'a plus de protection 1 + 1 et que le chemin opérationnel s'avère défaillant.
